# EUROPEAN PATENT SPECIFICATION

(11) **EP 4 413 052 B1**
(45) Date of publication and mention of the grant of the patent: **03.12.2025**
(21) Application number: 21798906.0
(22) Date of filing: 05.10.2021
(51) Int. Cl.: C08C 19/04, B60C 1/00, C08K 3/04

(54) **REDUCED GRAPHENE OXIDE CARBONATE FUNCTIONALIZED ELASTOMER COMPOSITION**
FUNKTIONALISIERTE ELASTOMERZUSAMMENSETZUNG MIT REDUZIERTEM GRAPHENOXIDCARBONAT
COMPOSITION ÉLASTOMÈRE FONCTIONNALISÉE À BASE DE CARBONATE D'OXYDE DE GRAPHÈNE RÉDUIT

(43) Date of publication of application: 14.08.2024
(73) Proprietor: COMPAGNIE GENERALE DES ETABLISSEMENTS MICHELIN, 63000 Clermont-Ferrand (FR)
(72) Inventor: MEHLEM, Jeremy John, Greenville, South Carolina 29605 (US); JEAN-BAPTISTE-DIT-DOMINIQUE, François, Greenville, South Carolina 29605 (US); DRONET, Séverin, Greenville, South Carolina 29605 (US); KHRIPIN, Constantine, Greenville, South Carolina 29605 (US); VAUTARD, Frederic, Greenville, South Carolina 29605 (US)
(74) Representative: Casalonga
(86) International application number: PCT/US2021/053617
(87) International publication number: WO 2023/059317

(56) References cited:
- EP-A1- 3 484 934
- EP-A1- 3 873 751
- WO-A1-2019/132866

## Description

### FIELD OF THE INVENTION

The subject matter of the present invention relates to improved rubber compositions and particularly to reduced graphene oxide (RGO) carbonate functionalized (CCAM) elastomer compositions with improved properties.

### BACKGROUND OF THE INVENTION

It's long been shown that fillers improve the properties of rubber elastomers, improving wear resistance, increasing rigidity, increasing thermal conductivity and tear resistance. Formulations of rubber compositions are created by combing different proportions of elastomers, fillers and other components to create rubber compositions having specific properties and performance characteristics. These properties and characteristics can be varied by changing the composition ratios resulting in improved properties or performances in some or many aspects and a decrease in properties or performance in another aspect resulting in a compromise as the composition is changed as the formulator optimizes the composition for a particular purpose (wear resistance for the tread of a tire, or low hysteresis for a sidewall rubber of a tire. These compromises are sometimes broken and all-around performance characteristics are achieved when the components of new compositions are found to work synergistically to unexpectedly improve all or many of the properties or characteristics of the rubber.

Different fillers lend positive and negative traits to elastomer formulations and new filler-elastomer discoveries represent breakthroughs in standard performance characteristics of elastomers resulting in a break from the standard compromises. Among the innovative fillers Reduced Graphene Oxides (RGOs) have shown very interesting properties regarding the rigidity/energy dissipation compromise, surpassing conventional fillers like carbon black and silica. Indeed, high levels of rigidity were obtained at low concentration (4-5 wt.% SBR2300 to obtain a rigidity equivalent to a mix made with 32 wt.% of N234) and low levels of energy dissipation were obtained.

While many properties of RGO elastomers are encouraging, wear studies indicate that the resistance to wear of RGO elastomers to be poor. This represents disappointing results discouraging the use of RGO in tread-rubber formulation. A need exists for improvement to wear resistance. A RGO formulation that improves the elastomer's rigidity vs. energy dissipation compromise and reduce the rolling resistance of the tire would be particularly useful.

### SUMMARY OF THE INVENTION

Aspects and advantages of the invention will be set forth in part in the following description, or may be obvious from the description, or may be learned through practice of the invention.

In one exemplary embodiment, a carbonate functionalized elastomer is mixed with a reduced graphene oxide filler to produce a rubber composition.

These and other features, aspects and advantages of the present invention will become better understood with reference to the following description and appended claims. The accompanying drawings, which are incorporated in and constitute a part of this specification, illustrate properties of embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 shows an SEM picture of a 5 wt.% RGO/SBR2300 mix showing non-reinforced rubber between RGO aggregates.
FIG. 2 shows RPA curves for SBR1500 (blue) and CCAM (red) with N002-PDE, standard and high temperature mixing .
FIG. 3 shows MSV curves for SBR1500 (blue) and CCAM (red) with N002-PDE, standard and high temperature mixing.
FIG. 4 provides DMA, strain sweep at 23°C, N002-PDE in SBR1500 (blue) and CCAM (red).
FIG. 5 shows DMA, temperature sweep at stress = 0.7 MPa, N002-PDE in SBR1500 (blue) and CCAM (red).
FIG. 6 depicts abrasion resistance as measured by a proprietary abrasion test, N002-PDE in SBR1500 and CCAM.
FIG. 7 shows MSV curves corresponding to 5 wt.% N002-PDE-CCAM composites with the different versions of the CCAM elastomer.
FIG. 8 shows Dynamic properties, strain sweep at 23°C, shear modulus (left) and energy dissipation (right).
FIG. 9 shows the energy dissipation vs shear modulus at max Tan delta.
FIG. 10 provides Dynamic properties, temperature sweep at stress = 0.7 MPa.
FIG. 11 provides abrasion results from a proprietary abrasion test for the PDE 5 wt.%-CCAM composites with the different versions of the CCAM elastomer.

### DETAILED DESCRIPTION OF THE INVENTION

The present invention provides a reduced graphene oxide containing rubber composition having an improved rigidity versus energy dissipation compromise while improving wear resistance. This rubber formulation may find particular use for articles including tires and particularly for the tread rubber of tires.

For purposes of describing the invention, reference now will be made in detail to embodiments and/or methods of the invention, one or more examples of which are illustrated in or with the drawings. Each example is provided by way of explanation of the invention, not limitation of the invention. In fact, it will be apparent to those skilled in the art that various modifications and variations can be made in the present invention without departing from the scope or spirit of the invention. For instance, features or steps illustrated or described as part of one embodiment, can be used with another embodiment or steps to yield a still further embodiment or method. Thus, it is intended that the present invention covers such modifications and variations as come within the scope of the appended claims and their equivalents.

In the examples that follow, various material properties are described. These properties were obtained using tests as ordinarily used to quantify such properties and are described as follows:

"Mn" is the number average molecular weight. This is the total weight of all polymer molecules contained in a sample divided by the total number of polymer molecules of the sample. It is an arithmetic average - all chains are equally important when calculating this parameter.

"Mw" is the weight average molecular weight. This is based on the fact that a bigger molecule contains more of the total weight of the polymer sample than smaller molecules. This parameter is highly susceptible to chains of high molecular weight.

"IP" is the polydispersity of an elastomer. This measures the amplitude of the Molecular Weights Distribution curve (MWD) and represents the ratio between the average molecular weight (Mw) and the average molecular weight in number (Mn).

A true secant modulus of elongation (MPa) was measured at 10% (MA10), 100% (MA100) and 300% (MA300) at temperature of 23°C based on ASTM Standard D412 on dumb bell test pieces.

The elongation property was measured as strain at break (%) and the corresponding stress at break (MPa), which is measured at 23°C in accordance with ASTM Standard D412 on ASTM C test pieces.

The shear modulus G* at 10% strain and the maximum tan delta dynamic properties for the rubber compositions were measured at 23°C on a Metravib Model VA400 ViscoAnalyzer Test System in accordance with ASTM D5992-96. The response of a sample of vulcanized material (double shear geometry with each of the two 10 mm diameter cylindrical samples being 2 mm thick) was recorded as it was being subjected to an alternating single sinusoidal shearing stress at a frequency of 10 Hz under a controlled temperature of 23° C. Scanning was effected at an amplitude of deformation of 0.05 to 50% (outward cycle) and then of 50% to 0.05% (return cycle). The shear modulus G* at 10% strain and the maximum value of the tangent of the loss angle tan delta were determined during the return cycle.

To test fatigue of the elastomer samples, fatigue to fracture or "FTF" testing in accordance with ASTM D4482 - 11(2017) Standard Test Method for Rubber Property was carried out. The extension cycling fatigue temperature was set at 25°C.

The "Hot Dz test" is used to test tear strength of the elastomer samples, testing in accordance with ASTM D624 - 00(2012) "Standard Test Method for Tear Strength of Conventional Vulcanized Rubber and Thermoplastic Elastomers" was conducted at 100°C. The Dz index is equivalent to the rupture force times the elongation at break divided by 100.

To determine the wear performance of rubber, a proprietary abrasion resistance test was conducted where a rubber specimen of known mass was loaded against a simulated road surface to a pressure of 1 bar, then moved under pressure for a distance of 4 m. The mass of the sample was then measured again to determine the amount of rubber lost.

### Carbonate Functionalized Elastomer Synthesis

The carbonate functionalized elastomer may be made, such as, for example by the method disclosed in patent application publication WO2021/069841 which is hereby incorporated by reference. In the present application, the term "carbonate function" is understood to mean the group of formula "-O(C = O)O-". The carbonate functional group is in a cyclic structure, since it is present in the form of the 1,3-dioxolan-2-one ring.

In the present application, the term "1,3-diene monomer unit" is understood to mean a unit which results from the insertion of a 1,3-diene monomer into a growing polymer chain. In a known manner, the units of a 1,3-diene monomer may result from a 1,2-or 1,4-insertion of the 1,3-diene monomer into the polymer chain. In the case of a 1,4 insertion, they may be in the cis or trans configuration.

In the present application, the word (meth)acrylate denotes either acrylate or methacrylate.

In the present description, the expression "pendent" relating to the carbonate function is used in the same sense as the term "pendent" used in the definition of "pendent group" given by IUPAC, PAC, 1996, 68, 2287.

The elastomer useful for the purposes of the invention comprises units of a 1,3-diene monomer. Mention may be made, as 1,3-diene monomer, of those having 4 to 8 carbon atoms, such as, for example, 1,3-butadiene,2,3-dimethyl-1,3-butadiene, isoprene or piperylene. Their halogenated derivatives are also suitable, such as, for example, chloroprene. The 1,3-diene monomer may also consist of a mixture of these monomers, to which the 1,3-diene monomer units consist of the monomer units of each of the monomers making up the mixture.

The elastomer which is useful for the purposes of the invention carries carbonate functional groups which are each present in a 1,3-dioxolan-2-one ring. The carbonate functions may be pendant. The carbonate functions may be pendent and located outside the chain ends of the elastomer. In particular, the pendant position of the carbonate functions makes the carbonate functions more accessible to the chemical functions of the polyamine crosslinking agent, which promotes the crosslinking of the elastomer chains and therefore the rigidity of the material.

According to one embodiment of the invention, the carbonate functions may be introduced by chemical modification of a polymer. They may, for example, be grafted along an elastomer comprising 1,3-diene monomer units. Thus, the carbonate functional groups may be present in compounds at least substituted with a group containing a 1,3-dioxolan-2-one ring and a functional group which is reactive with the elastomer. It is possible to envisage various types of chemistry known to those skilled in the art for grafting functional groups onto diene elastomers, which may or may not carry functional groups which are reactive with the grafting compound. By way of example, mention may be made of grafting via a compound comprising a group containing a 1,3- dioxolan-2-one ring and a function capable of forming a [1,3] dipolar addition to an unsaturated carbon-carbon bond, for example a nitrile oxide, a nitrone or a nitrile imine.

According to another embodiment of the invention, the carbonate functions may be introduced by copolymerization with at least one diene monomer forming the 1,3-diene monomer units. Thus, the carbonate functions may be present in monomer units of a vinyl monomer at least substituted with a group containing a 1,3- dioxolan-2-one ring.

The vinyl monomer may be a vinyl monomer containing the 2-oxo-1,3-dioxolan-4-yl group of formula (I).

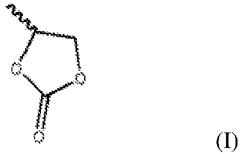

Those skilled in the art will understand that the symbol "~~~~" used in formula (I) represents an attachment of the CH of the ring to the vinyl monomer.

The vinyl monomer may have the CH2 = C < unit. The presence of this unit in the vinyl monomer promotes the copolymerization of the vinyl monomer with the 1,3-diene in the synthesis of the elastomer which is useful for the invention.

According to one particular embodiment, the vinyl monomer is a (meth) acrylate monomer of formula (II). The vinyl monomer may also be a mixture of (meth)acrylates of formula (II) which differ from one another by the groups R 1 or R 2. 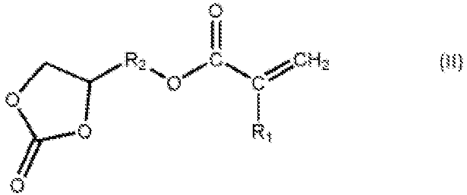 wherein
Ri is hydrogen or methyl,
R2 is a hydrocarbon chain which may be interrupted or substituted by one or more heteroatoms. The (meth)acrylate monomer of formula (II) may be chosen from the group consisting of the compounds of formula (III), (IV) and (V), and mixtures thereof.

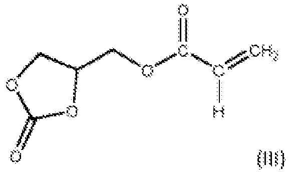

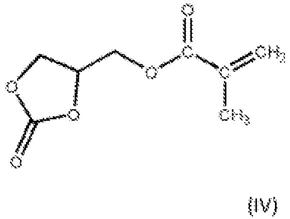

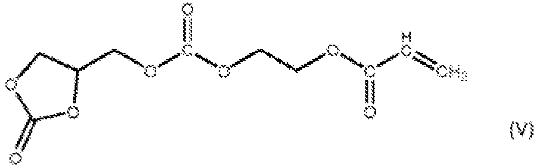

The (meth) acrylate monomer of formula (II) may be the compound of formula (III), the compound of formula (IV) or a mixture thereof.

According to this other embodiment of the invention, the carbonate functional group may be provided along the chain of the elastomer by free-radical polymerization of a monomer mixture comprising at least 1,3-diene and the vinyl monomer at least substituted with a group containing a 1,3-dioxolan-2-one ring. This method of synthesis is described in document FR3053974.

The content of carbonate functional groups may be between 0.1 and 20 mol per 100 mol of monomer units constituting the elastomer which is useful for the needs of the invention. Below the value of 0.1, the bridge density after crosslinking of the elastomer chains is likely insufficient to provide satisfactory rigidity to the material as a function of its use. Beyond the value of 20, the stiffening of the polymer composition may likely be too strong for certain rubber components of the tire which must be sufficiently deformable, for example to absorb impacts. For certain applications, the content of carbonate functional groups may be between 0.1 and 5 mol per 100 mol of monomer units constituting the elastomer which is useful for the needs of the invention.

According to one embodiment of the invention, the elastomer useful for the purposes of the invention also contains units of a vinylaromatic monomer. Suitable vinylaromatic monomers are, for example, styrene and aromatic compounds containing a double bond which can be polymerized by the radical route, such as, for example, compounds derived from the alkylation of styrene, from the halogenation of styrene, from the haloalkylation of styrene and styrene ether derivatives. Preferably, the vinylaromatic monomer is styrene.

According to this particular embodiment of the invention, the units of the vinylaromatic monomer may represent less than 45%, or alternatively less than 35% by mass of the elastomer useful for the needs of the invention.

According to another variant of the invention, the elastomer useful for the needs of the invention is a copolymer of at least one 1,3-diene and a vinyl monomer at least substituted with a group containing a 1,3-dioxolan-2-one ring, the 1,3-diene and the vinyl monomer being defined according to any one of the embodiments of the invention.

According to a second preferred variant of the invention, the elastomer useful for the purposes of the invention is a terpolymer of a 1,3-diene, a vinyl monomer at least substituted with a 1,3-dioxolan-2-one ring-containing group and a vinyl aromatic monomer, wherein the 1,3-diene, vinyl monomer and vinyl monomer are defined according to any of the embodiments of the invention.

The carbonate functional group (circled in red) may be inserted through the copolymerization of a styrene-butadiene rubber ("SBR") with a methacrylate monomer bearing the carbonate group, generating an ester functional group, as shown in the formulae (VI) below.

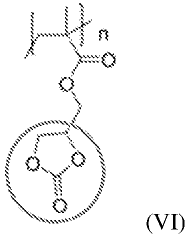

For an analytical comparison involving functionalized and non-functionalized SBRs, SBR1500 is the control, as it has the same microstructure (Table 1). The macrostructures are similar, with the polydispersity index of the functionalized SBR being sensibly higher. While the elastomer used in the embodiment discussed here is SBR, other elastomers may be used including polybutadienes, synthetic polyisoprenes, natural rubber, copolymers of butadiene, isoprene copolymers and mixtures of these elastomers with or without SBR.

**Table 1: Macro and micro structures of the non-functionalized and functionalized SBRs.**

| | Microstructure | | | | Tg (°C) | Mn | Mw | IP |
|---|---|---|---|---|---|---|---|---|
| | %mol styrene | %mol butadiene 1.2 | %mol butadiene 1.4 | %mol CCMA | | | | |
| CCAM_E1 | 14.5 | 12.7 | 70.1 | 2.7 | -50 | 128000 | 482000 | 3.75 |
| SBR1500 | 15.9 | 15.1 | 69 | -- | -48 | 145000 | 480000 | 3.21 |

### Composition of the Rubber Mixes

The carbonate group are thought to interact with oxygen-containing functionalities as polar groups (hydroxyl groups, or epoxide groups). The carbonate functionalized ("CCAM") elastomer was evaluated in an elastomer test mix with N002-PDE at a concentration of 5 wt.% (Table 2). N002-PDE is an RGO reference from the Global Graphene Group (G3, Dayton, OH, USA), with 5-6 mol % in oxygen and a specific surface area of 860 m²/g. Both standard (start at 110°C) and high temperature ("HT") (start at 140°C) mixing and milling processes were used using a Bandbury mixer (Haake PolyLab OS RheoDrive from ThermoFisher) and Brabender mill.

**Table 2: Composition of CCAM and SBR1500-based mixes with N002-PDE filler (in grams).**

| | **PDE 5 wt.%_CCAM** | **PDE 5 wt.%**_**SBR1500** |
|---|---|---|
| CCAM | 48.34 | |
| SBR1500 | | 48.34 |
| ZnO | 0.97 | 0.97 |
| SAD | 0.58 | 0.58 |
| 6PPD | 0.97 | 0.97 |
| N002-PDE | 2.76 | 2.76 |
| S | 0.71 | 0.71 |
| CBS | 0.71 | 0.71 |

The rubber formulations were prepared by mixing the components given in Table 3, except for the sulfur and the accelerator (CBS), in a HAAKE Banbury mixer. With the mix chamber at 110°C operating at 90 RPM the rubber is added and mixed for 1 minute. The rotation speed is decreased to 30 RPM and the filler is added and mixed for an additional 1 minute. The rotation speed is increased to 90 rpm and mixed for an additional 1 minute. Finally the anti-degradants ZnO (zinc oxide), 6PPD (N-(1,3-dimethylbutyl)-N'-phenyl-1,4-benzenediamine) as well as a processing aid, SAD (steric acid derivative) are added and mixed for an additional minute. The mixer piston is raised and lowered and mixed for an additional minute. The mix is dropped allowed to cool, then mixed on a 2-roll mill at 50°C. The accelerator and sulfur were added at this point and were milled for a total of 12 passes after full incorporation of the accelerator and sulfur.

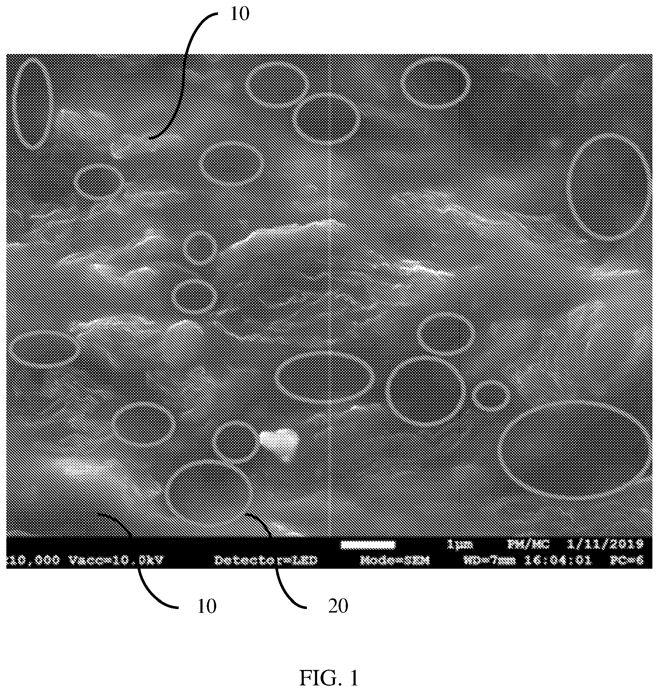

A 5 wt.% RGO/SBR2300 mix was imaged under a scanning electron microscope ("SEM") and is shown in Figure 1. Areas of a N002-PDE reduced graphene oxide particles 10 and areas of non-reinforced rubber shown in circles 20 can be observed in the SEM image which shows areas for improved dispersion and adherence can be obtained in the non-functionalized rubber and RGO mix..

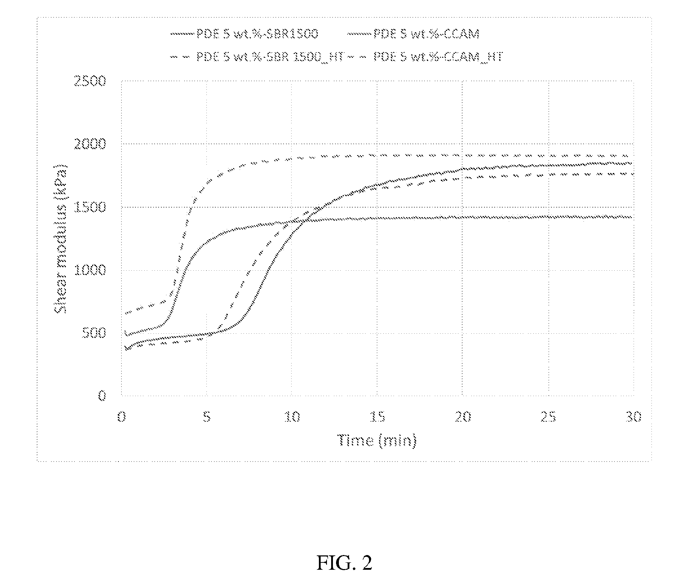

Rheometry highlighted the fact that the scorch time is significantly reduced when using the CCAM rubber in comparison to SBR1500, but it should still be compatible with industrial practice (Figure 2). In the case of the standard mixing process, a sharp drop of the shear modulus in the cured stated is observed when switching from SBR1500 to CCAM. With a high temperature ("HT") mixing process, a slight decrease of the shear modulus in the cured state was observed with SBR1500, which is a first indication of a linearization of the mix. On the contrary, an increase was seen with CCAM, leading to a higher shear modulus than with SBR1500.

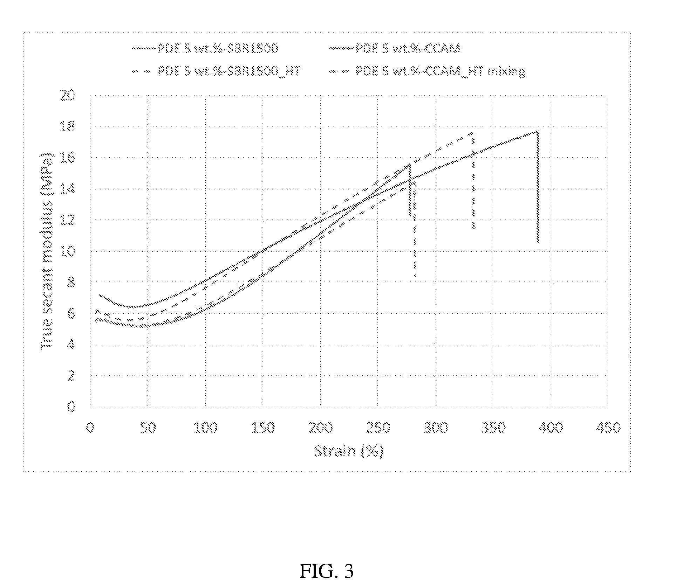

Static tensile properties showed a sharp difference between SBR1500 and CCAM (Figure 3 and Table 3). CCAM led to lower rigidity, but with a much steeper slope of the MSV curve at high strain, suggesting much stronger interactions at the interface. The tensile strength and strain at break were lower as well, so the rubber composite became more brittle because of the better interfacial adhesion. The high temperature mixing led to a linearization of the SBR1500-based mix (lower rigidity, better reinforcement). Elastomer chains were probably grafted at the surface of the N002-PDE sheets during mixing because of thermal degradation of the elastomer. The effect was not observed with CCAM, as similar rigidities were obtained but with a significant decrease of the tensile strength at break.

**Table 3: Tensile properties indicators corresponding to Figure 3.**

| | **MA 10 (MPa)** | **MA 100 (MPa)** | **MA 300 (MPa)** | **Tensile stress at break (MPa)** | **Tensile strain at break (%)** |
|---|---|---|---|---|---|
| **PDE 5 wt.%-SBR1500** | 7.13 ± 0.20 | 8.10 ± 0.06 | 15.26 ± 0.07 | 14.00 ± 0.98 | 388 ± 36 |
| **PDE 5 wt.%-SBR1500_HT** | 6.02 ± 0.33 | 7.81 ± 0.12 | 16.54 ± 0.10 | 13.57 ± 1.18 | 332 ± 33 |
| **PDE 5 wt.%-CCAM** | 5.57 ± 0.18 | 6.33 ± 0.09 | -- | 11.41 ± 1.73 | 277 ± 35 |
| **PDE 5 wt.%-CCAM_HT** | 5.80 ± 0.19 | 6.65 ± 0.13 | -- | 10.76 ± 1.01 | 285 ± 26 |

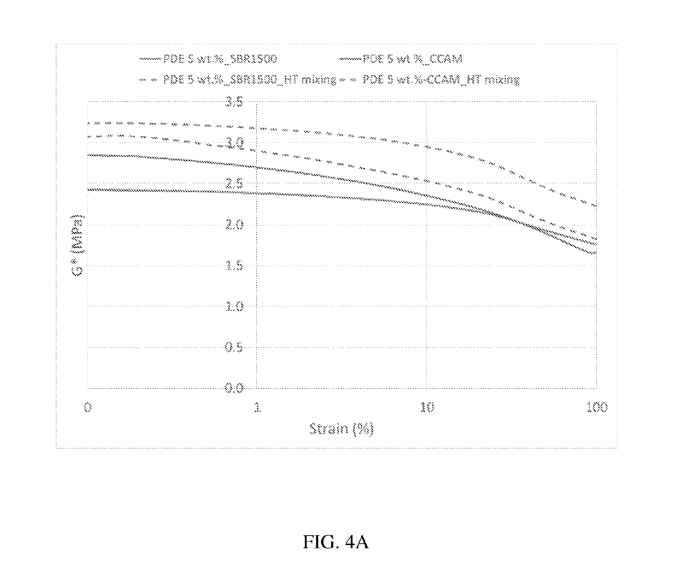

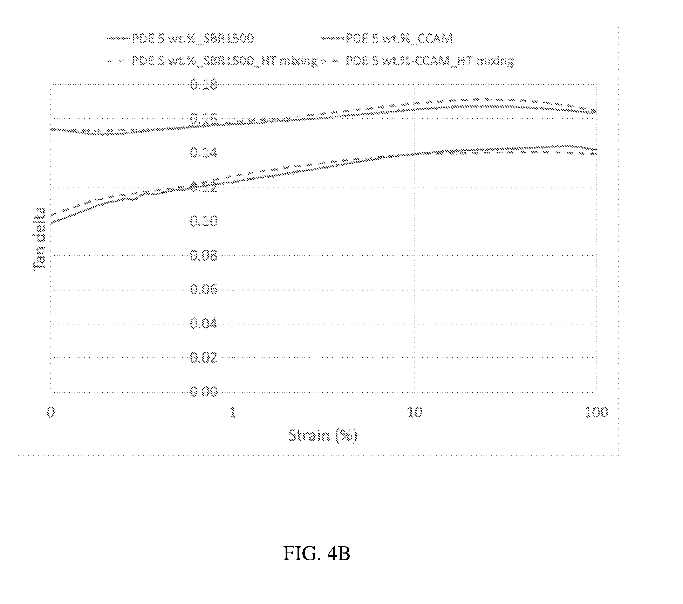

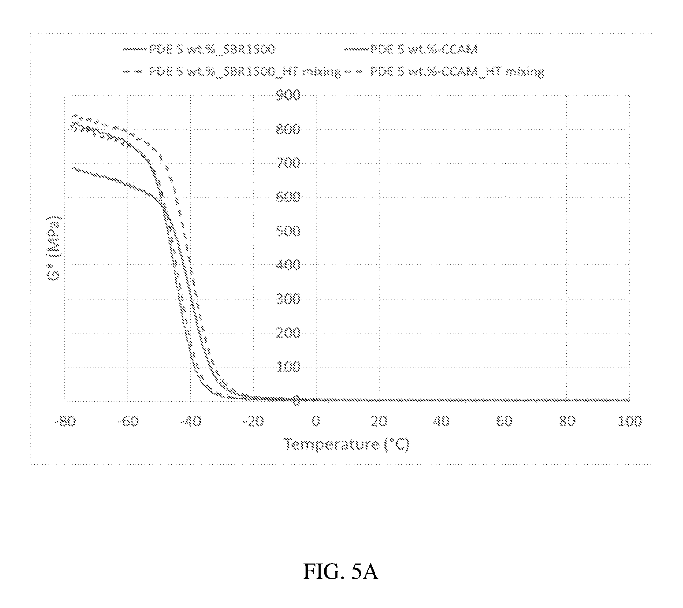

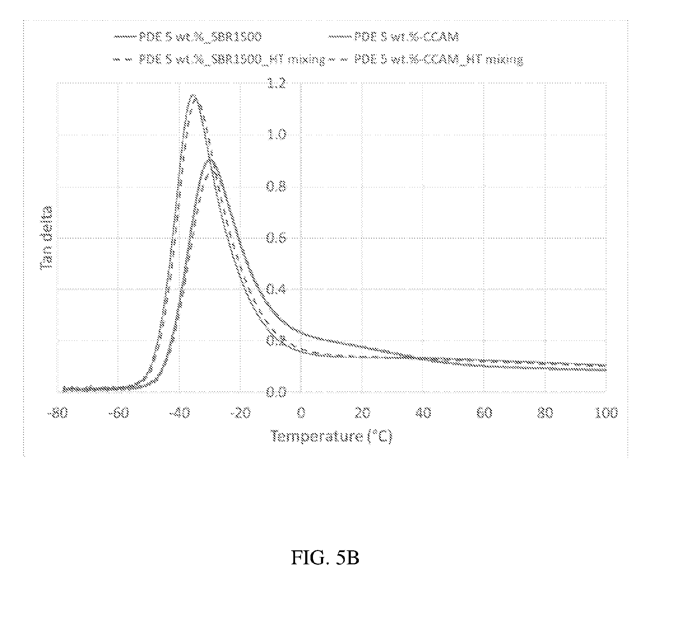

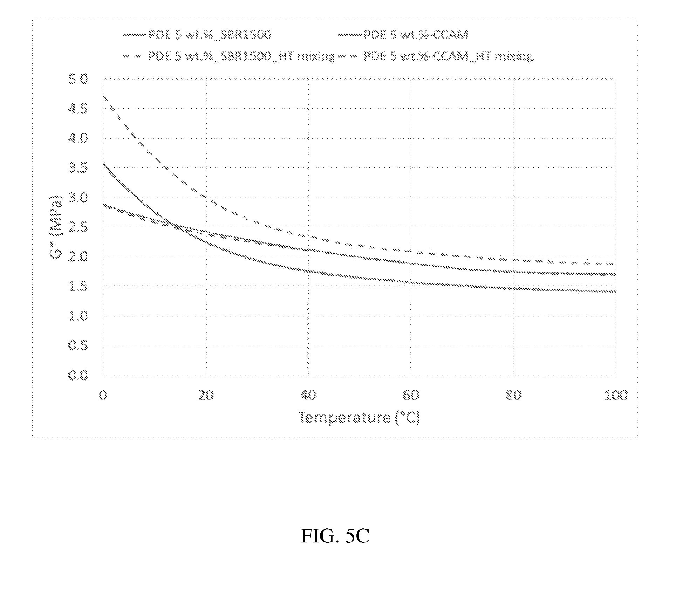

Dynamic properties confirmed a linearization of the mix when switching from SBR1500 to CCAM, but with an increase in energy dissipation (Figure 4 and Table 4), because of a second component between 0°C and 20°C in the tan delta peak during a temperature sweep (Figure 5). This is because the distribution of the carbonate functions in the SBR elastomer chain is not even. The high temperature mixing led to similar rigidity for SBR1500 (slightly higher rigidity during the strain sweep but identical during the temperature sweep) and equivalent energy dissipation. High temperature mixing with CCAM led to a significant increase in rigidity for the same energy dissipation. More strong interactions at the interface were generated with high temperature mixing.

**Table 4: Dynamic properties indicators corresponding to Figures 4 and 5.**

| | **G* 10% (MPa)** | **Max tan delta** | **G* 60°C (MPa)** |
|---|---|---|---|
| **PDE 5 wt.%_CCAM** | 2.25 | 0.17 | 1.57 |
| **PDE 5 wt.%_CCAM_HT mixing** | 2.95 | 0.17 | 2.08 |
| **PDE 5 wt.%_SBR1500** | 2.36 | 0.14 | 1.89 |
| **PDE 5 wt.%_SBR1500_HT mixing** | 2.53 | 0.14 | 1.88 |

Dynamic properties confirmed a linearization of the mix when switching from SBR1500 to CCAM, but with an increase in energy dissipation (Figure 4 and Table 4), because of a second component between 0°C and 20°C in the tan delta peak during a temperature sweep (Figure 5). This is because the distribution of the carbonate functions in the SBR elastomer chain is not even. The high temperature mixing led to similar rigidity for SBR1500 (slightly higher rigidity during the strain sweep but identical during the temperature sweep) and equivalent energy dissipation. A high temperature mixing with CCAM led to a significant increase in rigidity for the same energy dissipation. More strong interactions at the interface were generated with high temperature mixing.

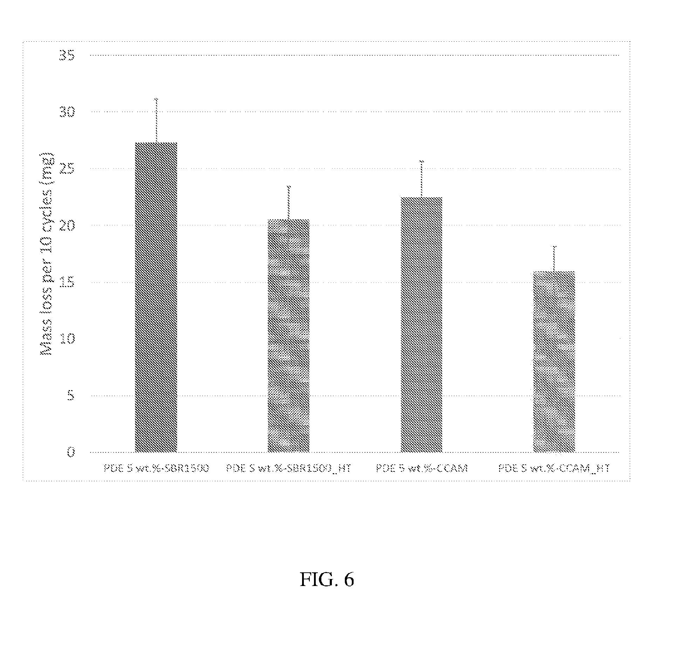

Wear test results were correlated to the level of reinforcement seen with the static tensile test (Figure 6). The CCAM-based mix clearly had a superior resistance to wear compared to the SBR1500-based one, especially if one considers that its Tg is higher, and a high temperature mixing improved that resistance for both rubber versus a standard mixing process.

Variations in the carbonate functional group concentration and the molecular weight of the elastomer were tested (Table 5).

**Table 5: Description of the different CCMA functionalized SBRs.**

| | **Mn (Kg/mol)** | **Mw (Kg/mol)** | **IP** | **%mol styrene** | **%mol but 1.2** | **%mol but 1.4** | **%mol CCAM** | **Tg/delta (°C)** |
|---|---|---|---|---|---|---|---|---|
| **E1** | 128 | 482 | 3.75 | 14.5 | 12.7 | 70.1 | 2.7 | -50 |
| **E2** | 116 | 494 | 4.27 | 15.6 | 12.8 | 70.3 | 1.3 | -49/6.3 |
| **E3** | 107 | 397 | 3.7 | 15 | 12.7 | 70.1 | 2.2 | -49/6.4 |
| **E4** | 107 | 412 | 3.9 | 14.8 | 12.6 | 69.8 | 2.9 | -49/5 |
| **E5** | 82 | 283 | 3.45 | 15.2 | 12.9 | 69.5 | 2.4 | -48/8 |

### Mixes with 5 wt.% N002-PDE were made, as described above.

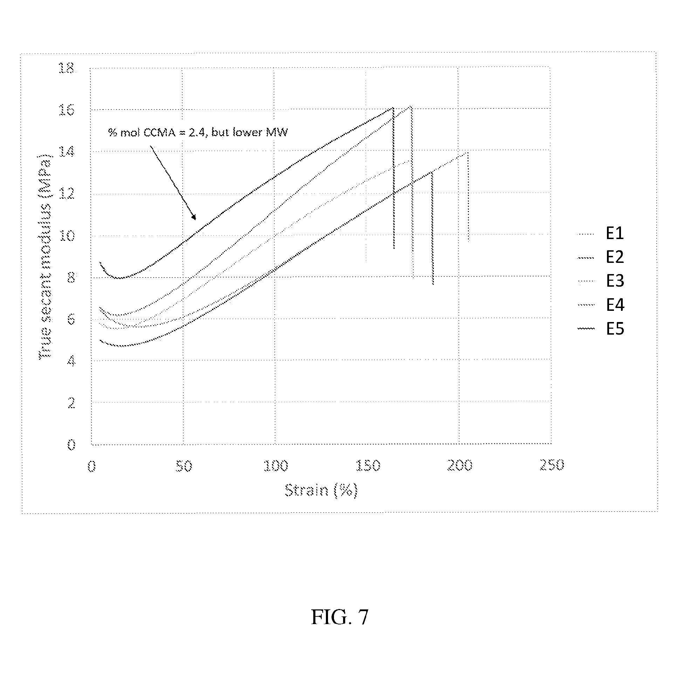

The static tensile properties showed that higher rigidities were obtained with a lower molecular weight. The content in carbonate group definitely had an impact of interfacial adhesion, as the curve showing the highest slope at high strain corresponded to the batch with the highest concentration in CCAM groups (E4 with 2.9 % mol CCAM-Figure 7 and Table 6).

**Table 6: Tensile properties indicators corresponding to Figure 7.**

| | **MA 10 (MPa)** | **MA 100 (MPa)** | **Tensile strength at break (MPa)** | **Tensile strain at break (%)** |
|---|---|---|---|---|
| **E1** | 5.94 ± 0.25 | 8.44 ± 0.18 | 9.23 ± 1.34 | 206 ± 27 |
| **E2** | 4.73 ± 0.11 | 8.28 ± 0.14 | 8.61 ± 1.13 | 187 ± 24 |
| **E3** | 5.72 ± 0.17 | 10.03 ± 0.06 | 8.60 ± 0.85 | 174 ± 20 |
| **E4** | 6.21 ± 0.08 | 11.27 ± 0.22 | 10.51 ± 048 | 176 ± 6 |
| **E5** | 8.10 ± 0.12 | 12.94 ± 0.13 | 9.94 ± 0.49 | 164 ± 10 |

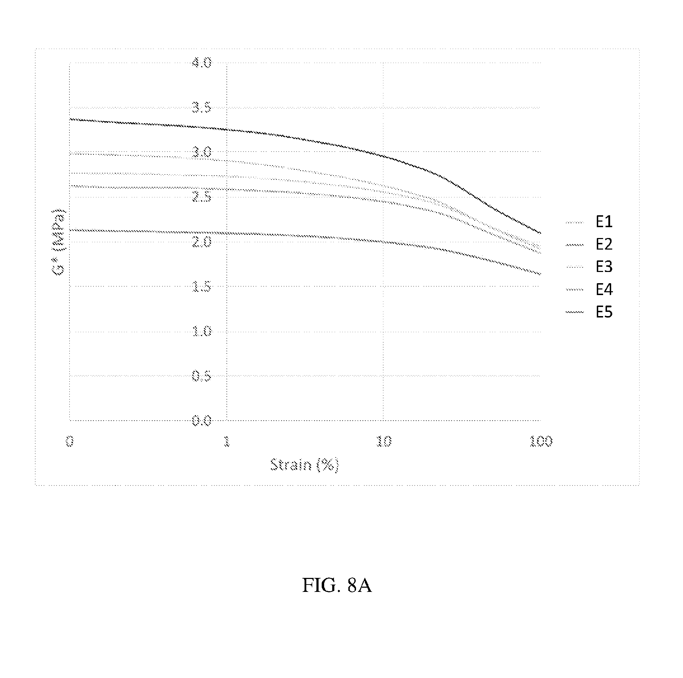

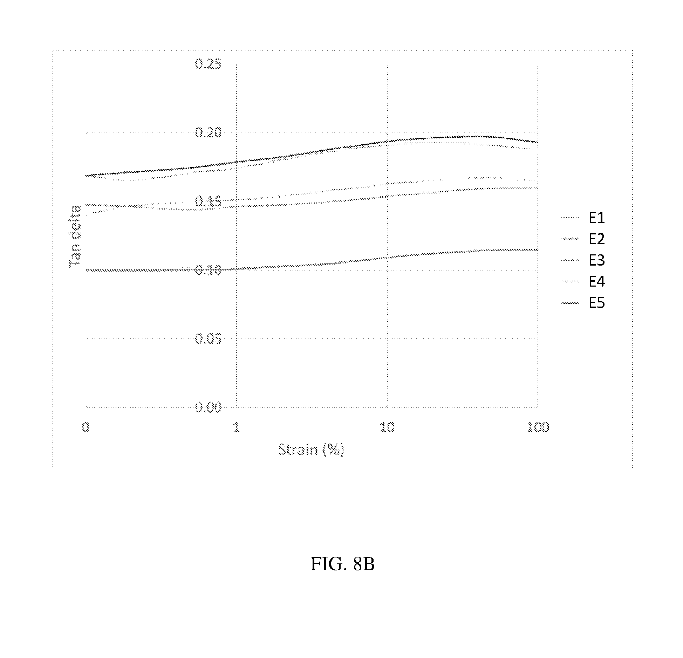

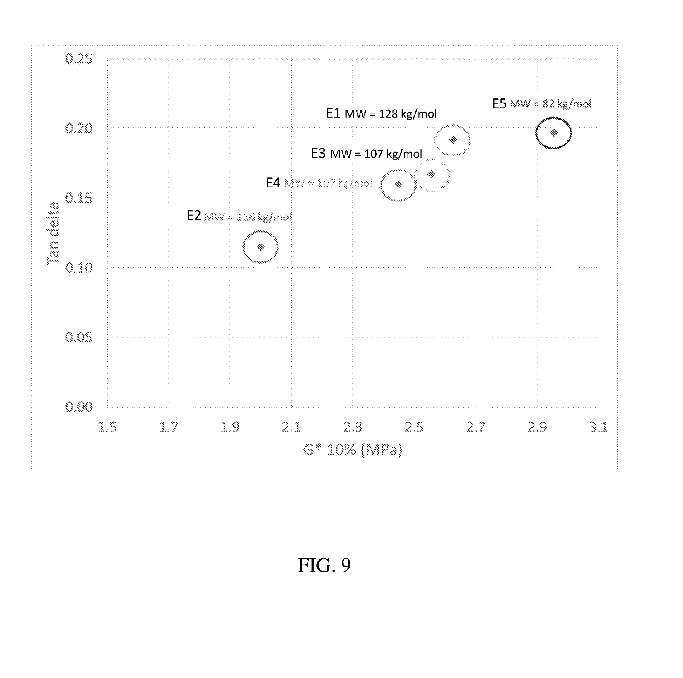

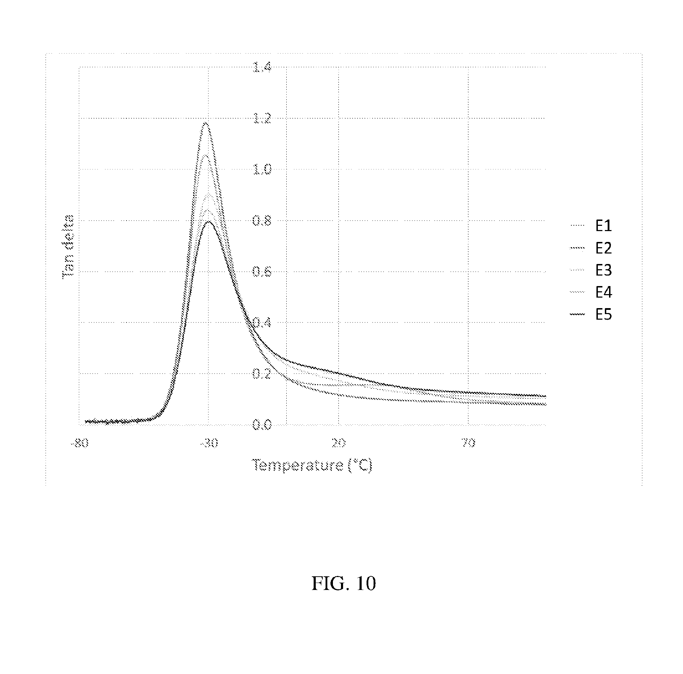

Dynamic properties showed that the lowest molecular weight version of CCAM E5 was leading to the highest value of energy dissipation (at equivalent rigidity to E1 - Figure 8 and Table 7). The lowest value in CCAM concentration (1.3 mol% with E2 led to the lowest rigidity. The three other references looked more interesting in comparison (Figure 9). A temperature sweep revealed a second peak after the glass transition temperature peak for E4 (Figure 10). This is because the carbonate functional groups are not evenly distributed in the elastomer chain. Getting the highest concentration in carbonate groups led to that non-uniform distribution.

E2, E3 and E4 possess an increase in CCMA percentage (and therefore a higher functionality) at iso molecular weight gives an increase in high strain modulus (MA100). This shows the added benefit to CCMA due to more interaction with the RGO present in the elastomer compound. E1, E3 and E5 shows that as the molecular weight decreases the MA100 improves. These results are summarized and shown in Table 6.5.

**Table 6.5: Summary of properties**

| | **%mol CCAM** | **MA 10 (MPa)** | **MA 100 (MPa)** | **Mn (Kg/mol)** | **Notes** |
|---|---|---|---|---|---|
| **E1** | 2.7 | 5.94 | 8.4 | 128 | |
| **E2** | 1.3 | 4.73 | 8.28 | 116 | Minus %carbonate |
| **E3** | 2.2 | 5.72 | 10.8 | 107 | Mid carbonate |
| **E4** | 2.9 | 6.21 | 11.3 | 102 | Plus % carbonate |
| **E5** | 2.4 | 8.1 | 12.9 | 82 | |

**Table 7: Dynamic properties indicators corresponding to Figure 8.**

| | **G* 10% (MPa)** | **Max tan delta** |
|---|---|---|
| **E1** | 2.63 | 0.19 |
| **E2** | 2.00 | 0.12 |
| **E3** | 2.56 | 0.17 |
| **E4** | 2.45 | 0.16 |
| **E5** | 2.95 | 0.20 |

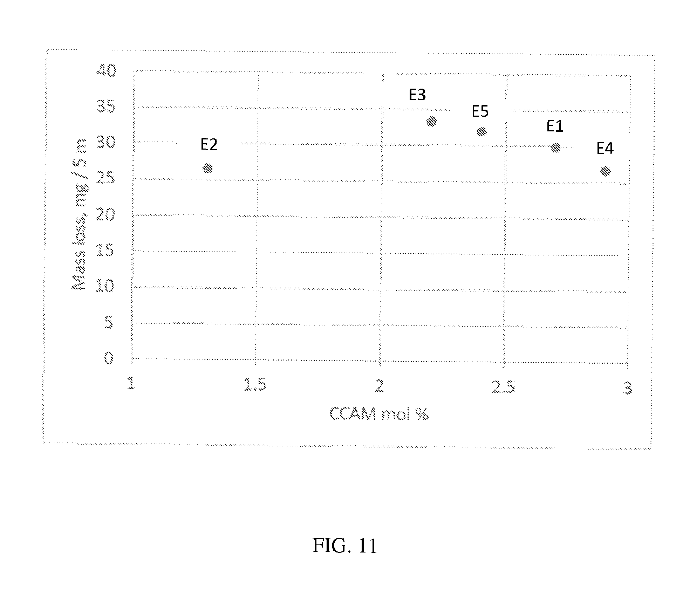

The wear resistance of the five mixes was measured by proprietary abrasion test (Figure 11). For the CCAM versions that had a molecular weight below 116kg/mol, the wear performance was improved with an increase of the CCAM functional groups concentration. No correlation was found with the molecular weight of the elastomer.

The RGO should have an oxygen content of 4-9 mol % or alternatively 5-8 mol% or in yet another alternative embodiment between 5-6%. In at least one embodiment, the specific surface area of the RGO should be of more than 800 m²/g and having either 4-9 mol% oxygen content, or alternatively 5-8 mol% or in yet another alternative embodiment between 5-6%.

As used herein, "phr" is "parts per hundred parts of rubber by weight" and is a common measurement in the art wherein components of a rubber composition are measured relative to the total weight of rubber in the composition, *i.e.,* parts by weight of the component per 100 parts by weight of the total rubber(s) in the composition.

As used herein, elastomer and rubber are synonymous terms.

## Claims

1. A rubber composition comprising:
a carbonate functionalized elastomer;
a reduced graphene oxide; and
a crosslinking system.

2. The rubber composition of claim 1 wherein the carbonate functionalized elastomer is a diene elastomer being selected from the group consisting of polybutadienes, synthetic polyisoprenes, natural rubber, copolymers of butadiene, styrene-butadiene, isoprene copolymers and mixtures of these elastomers.

3. The rubber composition of claim 1 or claim 2 wherein the reduced graphene oxide has an oxygen content of 5-20 mol %.

4. The rubber composition of claim 3 wherein the reduced graphene oxide has an oxygen content of 4-9 mol %.

5. The rubber composition of claim 3 wherein the reduced graphene oxide has an oxygen content of 5-8 mol %.

6. The rubber composition of claim 3 wherein the reduced graphene oxide has an oxygen content of 5-6 mol %.

7. The rubber composition of any one of the above claims wherein the carbonate functionalized elastomer has a functional group present in the range of 1.3 to 2.9 % mol.

8. The rubber composition of any one of the above claims wherein the carbonate functionalized elastomer has a functional group present in the range of 2.7 to 2.9 % mol.

9. The rubber composition of any one of the above claims wherein the reduced graphene oxide has a specific surface area of more than 800 m²/g.

10. The rubber composition of claim 9 wherein the reduced graphene oxide has a specific surface area of equal to or more than 860 m²/g.

11. The rubber composition of any one of the above claims wherein the molecular weight (Mn) of the polymer is in the range of 105 to 130 kg/mol.

12. The rubber composition of claim 11 wherein the molecular weight (Mn) of the polymer is in the range of 107 to 128 kg/mol.

13. The rubber composition of any one of the above claims, wherein the elastomer is a styrene butadiene rubber

14. The rubber composition of claim 11 wherein the styrene butadiene rubber is obtained by solvent polymerization.

15. A tire comprising the rubber composition of any one of the above claims.

## Patentansprüche

1. Kautschukzusammensetzung, umfassend:
ein funktionalisiertes Carbonat-Elastomer;
ein reduziertes Graphen-Oxid; und
ein Vernetzungssystem.

2. Kautschukzusammensetzung nach Anspruch 1, wobei das funktionalisierte Carbonat-Elastomer ein Dien-Elastomer ist, das aus der Gruppe ausgewählt ist, bestehend aus Polybutadienen, synthetischen Polyisoprenen, natürlichem Kautschuk, Copolymeren von Butadien, Styrol-Butadien, Isopren-Copolymeren und Mischungen dieser Elastomere.

3. Kautschukzusammensetzung nach Anspruch 1 oder Anspruch 2, wobei das reduzierte Graphen-Oxid einen Sauerstoffgehalt von 5-20 Mol-% aufweist.

4. Kautschukzusammensetzung nach Anspruch 3, wobei das reduzierte Graphen-Oxid einen Sauerstoffgehalt von 4-9 Mol-% aufweist.

5. Kautschukzusammensetzung nach Anspruch 3, wobei das reduzierte Graphen-Oxid einen Sauerstoffgehalt von 5-8 Mol-% aufweist.

6. Kautschukzusammensetzung nach Anspruch 3, wobei das reduzierte Graphen-Oxid einen Sauerstoffgehalt von 5-6 Mol-% aufweist.

7. Kautschukzusammensetzung nach einem der vorstehenden Ansprüche, wobei das funktionalisierte Carbonat-Elastomer eine funktionelle Gruppe aufweist, die in dem Bereich von 1,3 bis 2,9 Mol-% vorhanden ist.

8. Kautschukzusammensetzung nach einem der vorstehenden Ansprüche, wobei das funktionalisierte Carbonat-Elastomer eine funktionelle Gruppe aufweist, die in dem Bereich von 2,7 bis 2,9 Mol-% vorhanden ist.

9. Kautschukzusammensetzung nach einem der vorstehenden Ansprüche, wobei das reduzierte Graphen-Oxid eine spezifische Oberfläche von mehr als 800 m²/g aufweist.

10. Kautschukzusammensetzung nach Anspruch 9, wobei das reduzierte Graphen-Oxid eine spezifische Oberfläche gleich oder größer als 860 m²/g aufweist.

11. Kautschukzusammensetzung nach einem der vorstehenden Ansprüche, wobei das Molekulargewicht (Mn) des Polymers in dem Bereich von 105 bis 130 kg/mol liegt.

12. Kautschukzusammensetzung nach Anspruch 11, wobei das Molekulargewicht (Mn) des Polymers in dem Bereich von 107 bis 128 kg/mol liegt.

13. Kautschukzusammensetzung nach einem der vorstehenden Ansprüche, wobei das Elastomer ein Styrol-Butadien-Kautschuk ist.

14. Kautschukzusammensetzung nach Anspruch 11, wobei der Styrol-Butadien-Kautschuk durch Lösungspolymerisation erhalten wird.

15. Reifen, der die Kautschukzusammensetzung nach einem der vorstehenden Ansprüche umfasst.

## Revendications

1. Composition de caoutchouc comprenant :
un élastomère fonctionnalisé à base de carbonate ;
un oxyde de graphène réduit ; et
un système de réticulation.

2. Composition de caoutchouc selon la revendication 1, dans laquelle l'élastomère fonctionnalisé à base de carbonate est un élastomère diénique sélectionné parmi le groupe comprenant des polybutadiènes, des polyisoprènes synthétiques, du caoutchouc naturel, des copolymères de butadiène, du butadiène styrène, des copolymères d'isoprène et des mélanges de ces élastomères.

3. Composition de caoutchouc selon la revendication 1 ou la revendication 2, dans laquelle l'oxyde de graphène réduit possède une teneur en oxygène de 5 à 20 % en moles.

4. Composition de caoutchouc selon la revendication 3, dans laquelle l'oxyde de graphène réduit possède une teneur en oxygène de 4 à 9 % en moles.

5. Composition de caoutchouc selon la revendication 3, dans laquelle l'oxyde de graphène réduit possède une teneur en oxygène de 5 à 8 % en moles.

6. Composition de caoutchouc selon la revendication 3, dans laquelle l'oxyde de graphène réduit possède une teneur en oxygène de 5 à 6 % en moles.

7. Composition de caoutchouc selon l'une quelconque des revendications précédentes, dans laquelle l'élastomère fonctionnalisé à base de carbonate possède un groupe fonctionnel présent dans la plage de 1,3 à 2,9 % en moles.

8. Composition de caoutchouc selon l'une quelconque des revendications précédentes, dans laquelle l'élastomère fonctionnalisé à base de carbonate possède un groupe fonctionnel présent dans la plage de 2,7 à 2,9 % en moles.

9. Composition de caoutchouc selon l'une quelconque des revendications précédentes, dans laquelle l'oxyde de graphène réduit possède une aire de surface spécifique supérieure à 800 m²/g.

10. Composition de caoutchouc selon la revendication 9, dans laquelle l'oxyde de graphène réduit possède une aire de surface spécifique égale ou supérieure à 860 m²/g.

11. Composition de caoutchouc selon l'une quelconque des revendications précédentes, dans laquelle le poids moléculaire (Mn) du polymère est compris dans la plage de 105 à 130 kg/mol.

12. Composition de caoutchouc selon la revendication 11, dans laquelle le poids moléculaire (Mn) du polymère est compris dans la plage de 107 à 128 kg/mol.

13. Composition de caoutchouc selon l'une quelconque des revendications précédentes, dans laquelle l'élastomère est un caoutchouc de butadiène styrène.

14. Composition de caoutchouc selon la revendication 11, dans laquelle le caoutchouc de butadiène styrène est obtenu par polymérisation de solvant.

15. Pneu comprenant la composition de caoutchouc selon l'une quelconque des revendications précédentes.
